(19) Europäisches Patentamt
European Patent Office
Office européen des brevets

(11) EP 4 742 316 A1

(12) EUROPEAN PATENT APPLICATION

(43) Date of publication:
**13.05.2026 Bulletin 2026/20**

(21) Application number: **25213903.5**

(22) Date of filing: **06.11.2025**

(51) International Patent Classification (IPC):
***H01M 4/133*** (2010.01) ***H01M 4/525*** (2010.01)
***H01M 4/587*** (2010.01) ***H01M 4/62*** (2006.01)
***H01M 10/0525*** (2010.01)

(52) Cooperative Patent Classification (CPC):
**H01M 4/622; H01M 4/133; H01M 4/525; H01M 4/587; H01M 4/62; H01M 10/0525;**
H01M 2004/027; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.11.2024 KR 20240158040**

(71) Applicant: **SAMSUNG SDI CO., LTD.**
**Yongin-si, Gyeonggi-do 17084 (KR)**

(72) Inventors:
- **Goh, Aehui**
  **17084 Yongin-si, Gyeonggi-do (KR)**
- **Sim, Minji**
  **17084 Yongin-si, Gyeonggi-do (KR)**
- **Kang, Inah**
  **17084 Yongin-si, Gyeonggi-do (KR)**
- **Park, Sewon**
  **17084 Yongin-si, Gyeonggi-do (KR)**
- **Jeong, Hanmam**
  **17084 Yongin-si, Gyeonggi-do (KR)**
- **Lim, Hongjin**
  **17084 Yongin-si, Gyeonggi-do (KR)**
- **Cha, Si-Young**
  **17084 Yongin-si, Gyeonggi-do (KR)**
- **Kim, Minseo**
  **17084 Yongin-si, Gyeonggi-do (KR)**
- **Woo, Myungheui**
  **17084 Yongin-si, Gyeonggi-do (KR)**

(74) Representative: **Meissner Bolte Partnerschaft mbB**
**Patentanwälte Rechtsanwälte**
**Postfach 86 06 24**
**81633 München (DE)**

# (54) NEGATIVE ELECTRODE FOR RECHARGEABLE LITHIUM BATTERY AND RECHARGEABLE LITHIUM BATTERY INCLUDING THE SAME

(57) Provided are a negative electrode for a rechargeable lithium battery, and a rechargeable lithium battery including the negative electrode. The negative electrode includes a negative electrode current collector and a negative electrode active material layer on the negative electrode current collector. The negative electrode active material layer includes a negative electrode active material, a conductive material, a binder, and an additive.

FIG. 1

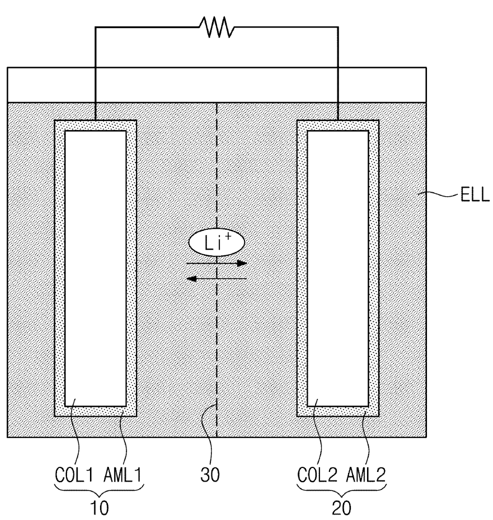


EP 4 742 316 A1

## Description

### BACKGROUND

The present disclosure relates to a negative electrode for a rechargeable lithium battery, and a rechargeable lithium battery including the negative electrode.

The increasing presence of battery-powered electronics, such as, e.g., mobile phones, laptop computers, electric vehicles, and the like, drives a rise in demand for rechargeable batteries exhibiting high energy density and high capacity. Accordingly, improving the performance of rechargeable lithium batteries may be advantageous.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

### SUMMARY

The present disclosure describes a negative electrode for a rechargeable lithium battery exhibiting improved adhesive strength between a negative electrode active material layer and a negative electrode current collector.

The present disclosure also describes a rechargeable lithium battery exhibiting improved heat resistance and safety.

An embodiment of the present invention includes a negative electrode for a rechargeable lithium battery, wherein the negative electrode includes a negative electrode current collector, and a negative electrode active material layer on the negative electrode current collector. The negative electrode active material layer includes a negative electrode active material, a binder, a conductive material, and an additive represented by Formula 1 or Formula 2 below.

[Formula 1]

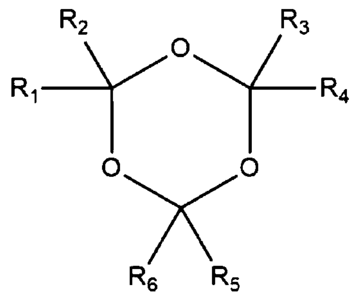

In Formula 1 above, $R_1$ to $R_6$ are each independently a hydrogen atom or a substituted or unsubstituted C1 to C10 alkyl group.

[Formula 2]

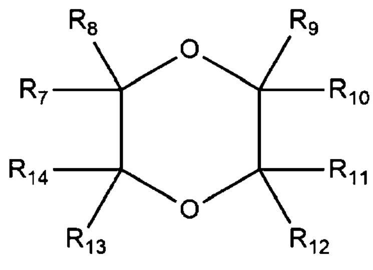

In Formula 2 above, $R_7$ to $R_{14}$ are each independently a hydrogen atom or a substituted or unsubstituted C1 to C10 alkyl group.

In an embodiment of the present invention, a rechargeable lithium battery includes a positive electrode, a negative electrode, and an electrolyte solution. The negative electrode is the negative electrode for a rechargeable lithium battery described above.

## BRIEF DESCRIPTION OF THE FIGURES

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual view showing a rechargeable lithium battery according to example embodiments of the present disclosure;
FIG. 2 is a cross-sectional view for describing a negative electrode plate according to example embodiments of the present disclosure; and
FIGS. 3 to 6 are schematic views showing a rechargeable lithium battery according to example embodiments of the present disclosure, and FIG. 3 shows a cylindrical battery, FIG. 4 shows a prismatic battery, and FIGS. 5 and 6 show pouch-type batteries.

## DETAILED DESCRIPTION

In order to sufficiently understand the configuration and effects of the present disclosure, example embodiments of the present disclosure are described with reference to the accompanying drawings. It should be noted, however, that the present disclosure is not limited to the following embodiments, and may be implemented in various forms and variously modified. The example embodiments herein are provided so that this disclosure is thorough and complete and fully conveys the scope of the present disclosure to those skilled in the art.
Herein, it is understood that when a component is referred to as being "on" another component, the component may be directly on another component, or an intervening third component may be present therebetween. In addition, in the drawings, thicknesses of components may be exaggerated for effectively describing technical contents. Like reference numerals refer to like elements throughout.
The example embodiments described herein are explained with reference to the cross-sectional views and/or plan views as ideal example views of the present disclosure. In the drawing, the thicknesses of films and regions may be exaggerated for effective description of the technical contents. Thus, regions presented as an example in the drawings have general properties, and shapes of the exemplified areas are used to illustrate a specific shape of a device region. Therefore, this should not be construed as limited to the scope of the present disclosure. Although the terms such as first, second, and third are used to describe various components in various example embodiments herein, the components should not be limited to these terms. These terms are used only to distinguish one component from another component. Embodiments described and exemplified herein include complementary embodiments thereof.
Terms used herein are not for limiting the present disclosure but for describing the example embodiments. As used herein, the singular forms include the plural forms as well, unless the context clearly indicates otherwise. The meaning of 'comprises' and/or 'comprising' used herein does not exclude the presence or addition of one or more other components besides a mentioned component.
As used herein, the term "combination thereof" may refer to a mixture, a stack, a composite, a copolymer, an alloy, a blend, or a reaction product.
Unless otherwise defined herein, a particle diameter may be an average particle diameter. In addition, a particle diameter is defined as an average particle diameter (D50) indicating the diameter of particles at a cumulative volume of about 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by, e.g., a measurement device using dynamic lightscattering, wherein data analysis is conducted to count the number of particles for each particle size range, and an average particle diameter (D50) value may then be obtained through calculation. Alternatively, the average particle diameter (D50) may be measured using a laser diffraction method. In the measuring using the laser diffraction method, for example, target particles are dispersed in a dispersion medium, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.
When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1 %.
FIG. 1 is a simplified conceptual view showing a rechargeable lithium battery according to example embodiments of the present disclosure. Referring to FIG. 1, the rechargeable lithium battery may include a positive electrode 10, a negative electrode 20, a separator 30, and an electrolyte solution ELL.
The positive electrode 10 and the negative electrode 20 may be spaced apart from each other by the separator

30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery may include a current collector COL1, and a positive electrode active material layer AML1 on the current collector COL1. The positive electrode active material layer AML1 may include a positive electrode active material, and may further include a binder and/or a conductive material.

For example, the positive electrode 10 may further include an additive that constitutes a sacrificial positive electrode.

The positive electrode active material layer AML1 may contain about 90 wt% to about 99.5 wt% of the positive electrode active material with respect to 100 wt% of the positive electrode active material layer AML1. With respect to 100 wt% of the positive electrode active material layer AML1, the binder and the conductive material may each amount to a range of about 0.5 wt% to about 5 wt%.

The binder may attach positive electrode active material particles to one another, and to attach the positive electrode active material to the current collector COL1. Typical examples of the binder may be or includes at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the example embodiment of the present disclosure is not limited thereto.

The conductive material may impart conductivity to the electrode. Any material that does not cause an undesirable chemical changes and that is an electron conductive material may be usable in batteries. Examples of the conductive material may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like in a form of a metal powder or a metal fiber; a conductive polymer such as a polyphenylene derivative; or a mixture thereof.

Al may be used as the current collector COL1, but the example embodiment of the present disclosure is not limited thereto.

## Positive Electrode Active Material

A compound capable of reversibly intercalating and deintercalating lithium (lithiated intercalation compound) may be used as a positive electrode active material in a positive electrode active material layer AML1. For example, at least one of a composite oxide of lithium and a metal such as or including at least one of cobalt, manganese, nickel, aluminum, and a combination thereof, may be used.

The composite oxide may be or include a lithium transition metal composite oxide, and examples thereof include at least one of lithium nickel-based oxide, lithium cobalt-based oxide, lithium manganese-based oxide, lithium iron phosphate-based compound, cobalt-free nickel-manganese-based oxide, or a combination thereof.

For example, the positive electrode active material may be or include a high nickel-based positive electrode active material having a nickel content in a range of about 80 mol% or greater, about 85 mol% or greater, about 90 mol% or greater, about 91 mol% or greater, or about 94 mol% or greater, with respect to 100 mol% of metals excluding lithium from the lithium transition metal composite oxide. The high nickel-based positive electrode active material may exhibit high capacity, and may thus be applied to high-capacity, high-density rechargeable lithium batteries.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

## Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, propylene propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Typical examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers in a range of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

Hereinafter, the negative electrode according to example embodiments of the present disclosure is described in detail. FIG. 2 is a cross-sectional view showing a negative electrode (negative electrode plate) according to example embodiments of the present disclosure.

## Negative Electrode 20

Referring to FIGS. 1 and 2, the negative electrode 20 for a rechargeable lithium battery according to example embodiments of the present disclosure may include a negative electrode current collector COL2 and a negative electrode active material layer AML2 positioned on the negative electrode current collector COL2. The negative electrode active material layer AML2 may include a negative electrode active material, a binder, a conductive material, and an additive represented by Formula 1 which is described below.

The negative electrode current collector COL2 may include at least one of a copper foil, a nickel foil, a stainless steel foil, a titanium foil, a nickel foam, a copper foam, a polymer substrate coated with a conductive metal, or a combination thereof

The binder may attach the negative electrode active material particles to each other, and to attach the negative

electrode active material to the negative electrode current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrilebutadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoridehexafluoropropylene copolymer, polyethylene oxide, or a combination thereof.

The conductive material may impart conductivity to the electrode. Any material that does not cause undesirable chemical changes and that is an electron conductive material may be usable in batteries. Examples of the conductive material may include a carbon-based material such as at least one of natural graphite, artificial graphite, carbon black, acetylene black, Ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The conductive material, the binder, and the negative electrode active material may be provided in a weight ratio of 1:a:b, where "a" may range from about 1 to about 3, and "b" may range from about 90 to about 99.

## Negative Electrode Active Material

The negative electrode active material in the negative electrode active material layer AML2 may include at least one of a material that reversibly intercalates/deintercalates lithium ions, a lithium metal, a lithium metal alloy, a material capable of doping/de-doping lithium, or a transition metal oxide.

The material that reversibly intercalates/deintercalates lithium ions may include a carbon-based negative electrode active material, for example, crystalline carbon, amorphous carbon, or a combination thereof. Examples of the crystalline carbon may be graphite such as irregular, planar, flaky, spherical, or fibrous natural graphite or artificial graphite, and examples of the amorphous carbon may be or include at least one of soft carbon, hard carbon, mesophase pitch carbide, fired cokes, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may be or include at least one of silicon, a silicon-carbon composite, $SiOx$ ($0 < x < 2$), a Si-Q alloy (where Q is or includes at least one of an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used

in combination with a carbon-based negative electrode active material.

**Additive**

An additive according to the present disclosure may be represented by Formula 1 or Formula 2 below.

Formula 1:

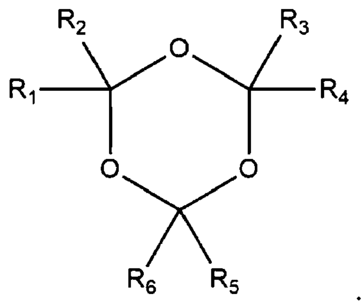

In Formula 1 above, $R_1$ to $R_6$ may each independently be or include a hydrogen atom or a substituted or unsubstituted C1 to C10 alkyl group.

For example, in Formula 1 above, $R_1$ to $R_6$ may all independently be or include C1 to C10 alkyl groups. For example, in Formula 1 above, $R_1$ to $R_6$ may all independently be or include hydrogen atoms. For example, in Formula 1 above, at least one of $R_1$ to $R_6$ may be or include a C1 to C10 alkyl group, and at least one of $R_1$ to $R_6$ may be or include a hydrogen atom.

In an example embodiment, the additive may include 1,3,5-trioxane (TRX) represented by Formula 1-1 below:

Formula 1-1:

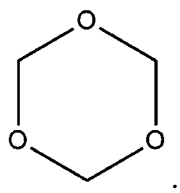

In an example embodiment, the additive may include at least one of a compound represented by Formula 1-2 below, a compound represented by Formula 1-3, a compound represented by Formula 1-4 below, or any combination thereof:

Formula 1-2:

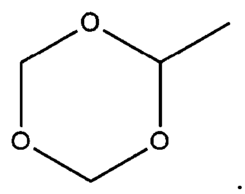

Formula 1-3:

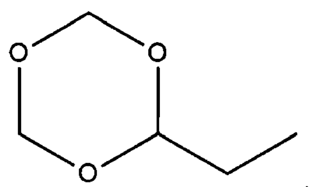

Formula 1-4:

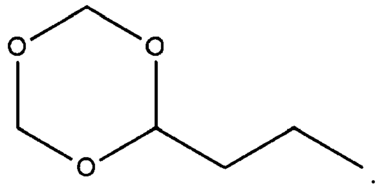

Formula 2:

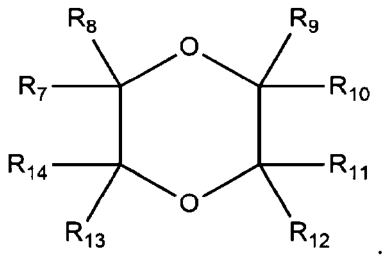

In Formula 2 above, $R_7$ to $R_{14}$ may each independently be or include a hydrogen atom or a substituted or unsubstituted C1 to C10 alkyl group.

For example, in Formula 2 above, $R_7$ to $R_{14}$ may all independently be or include C1 to C10 alkyl groups. For example, in Formula 2 above, $R_7$ to $R_{14}$ may all independently be or include hydrogen atoms. For example, in Formula 2 above, at least one of $R_7$ to $R_{14}$ may be or include a C1 to C10 alkyl group, and at least one of $R_7$ to $R_{14}$ may be or include a hydrogen atom.

In an example embodiment, the additive may include 1, 4-dioxane represented by Formula 2-1 below:

Formula 2-1:

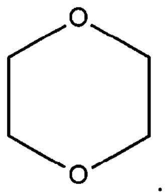

In an example embodiment, the additive may include a compound represented by Formula 2-2 below, a compound represented by Formula 2-3, a compound represented by Formula 2-4 below, or any combination thereof:

Formula 2-2:

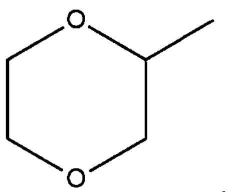

Formula 2-3:

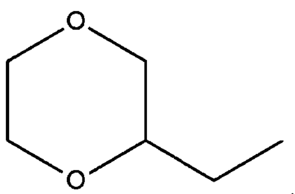

Formula 2-4:

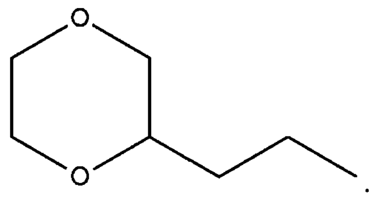

The additive may be included in an amount in a range of about 0.1 wt% to about 5 wt%, about 0.1 wt% to about 4 wt%, about 0.1 wt% to about 3 wt%, or about 0.2 wt% to about 2 wt%, with respect to a total weight of the negative electrode active material. For example, the additive may be included in an amount in a range of 0.2 wt% to about 1 wt% with respect to the total weight of the negative electrode active material.

When the amount of the additive is less than the above range, a film may not be fully formed on a negative electrode, and when the amount of the additive is greater than the above range, batteries may have reduced capacity and reduced lifetime resulting from increased resistance of the negative electrode film due to excessive decomposition reactions.

In an example embodiment, the additive may include dioxane or trioxane. A film made of dioxane or trioxane may be formed on a solid electrolyte interphase (SEI) layer containing LiF to form an organic-inorganic composite film. The organic-inorganic composite film may enable a negative electrode to have improved interface stability and life characteristics at high temperatures in a rechargeable lithium battery. Accordingly, the additive forms an electrochemically stable film on a surface of the negative electrode through a ring-opening reaction, and may thus reduce or suppress dendrite formation. Herein, the "ring-opening reaction" indicates a reaction in which a ring is broken in a cyclic compound to form a chain compound.

The negative electrode active material layer AML2, when including the additive, may exhibit improved adhesive strength between the negative electrode active material layer AML2 and the negative electrode current collector COL2, and may enable rechargeable lithium batteries to exhibit improved stability and cell lifespan characteristics. For example, an adhesive strength between the negative electrode current collector COL2 and the negative electrode active material layer AML2 may be in a range of about 0.2 gf/mm to about 0.4 gf/mm.

## Rechargeable Lithium Battery

The rechargeable lithium battery may be classified into cylindrical, prismatic, pouch, or coin-type batteries, and the like depending on their shape. FIGS. 3 to 6 are schematic views showing a rechargeable lithium battery according to example embodiments of the present disclosure, and FIG. 3 shows a cylindrical battery, FIG. 4 shows a prismatic battery, and FIGS. 5 and 6 show pouch-type batteries.

Referring to FIGS. 3 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 3. In addition, in FIG. 4, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 5 and 6, the rechargeable lithium battery 100 may include an electrode tab 70 illustrated in FIG. 6, or, for example, a positive electrode tab 71 and a negative electrode tab 72 illustrated in FIG. 5, the electrode tabs 70/71/72 forming an electrical path for inducing the current formed in the electrode assembly 40 to the outside of the battery 100.

The rechargeable lithium battery according to an example embodiment of the present disclosure may be applicable to, e.g., automobiles, mobile phones, and/or various types of electric devices, as non-limiting examples.

The rechargeable lithium battery according to an example embodiment of the present disclosure may include a positive electrode, the negative electrode described above, and an electrolyte solution.

The positive electrode may include a positive electrode active material, and the positive electrode active material may include a lithium composite oxide represented by Formula 3 below.

Formula 3: $Li_xM^1_yM^2_zM^3_{1-y-z}O_{2-a}X_a$.

x, a, y, and z may satisfy $0.5 \le x \le 1.8$, $0 \le a \le 0.05$, $0 < y \le 1$, $0 \le z \le 1$, and $0 < y+z \le 1$,

$M^1$, $M^2$, and $M^3$ may each independently include at least one of nickel (Ni), cobalt (Co), manganese (Mn), aluminum (Al), boron (B), barium (Ba), calcium (Ca), cerium (Ce), chromium (Cr), iron (Fe), molybdenum (Mo), niobium

(Nb), silicon (Si), strontium (Sr), magnesium (Mg), titanium (Ti), vanadium (V), tungsten (W), zirconium (Zr), and lanthanum (La), and a combination thereof.

X may include at least one of fluorine (F), sulfur (S), phosphorus (P), or chlorine (Cl).

For example, the positive electrode active material may include lithium cobalt oxide ($LiCoO_2$).

Hereinafter, examples of the present disclosure are described in more detail through Examples. However, the Examples are only illustrations for describing the present disclosure, and the scope of the present disclosure is not limited to Examples below.

## Example 1

### (1) Manufacturing of Negative Electrode

An additive was added to a water solvent in which artificial graphite as a negative electrode active material, styrene-butadiene rubber (SBR) as a binder, and carboxymethyl cellulose (CMC) as a thickener were mixed in a weight ratio of 97.6:1.5:0.9 to prepare a negative electrode slurry. The additive was added in an amount of 0.2 wt% with respect to a total weight of the negative electrode active material (artificial graphite).

A compound represented by Formula 1-1 below was used as the additive.

Formula 1-1:

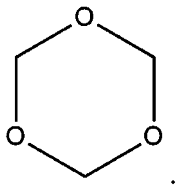

The prepared negative electrode slurry was applied onto both sides of a copper foil having a thickness of 10 μm using a reverse roll coater to achieve a loading level (L/L) was 8.4 $mg/cm^2$ to 8.7 $mg/cm^2$, and then dried at 120 °C. The negative electrode active material layer was roll pressed using a roll press to achieve a pellet density of 1.4 g/cc to 1.7 g/cc so as to manufacture a negative electrode (negative electrode plate).

The pellet density may be measured within a range of 3.0000 g ± 0.0004 g of the negative electrode active material. For example, the negative electrode active material is maintained at a pressure of 3 tons using a 13 mm KBr Pellet Die for 30 seconds, and the reduction in height is measured, and then the weight per volume is measured, which may be converted into density.

### (2) Manufacturing of Positive Electrode

Lithium cobalt oxide (LCO, $LiCoO_2$) as a positive electrode active material, polyvinylidene fluoride as a binder, and carbon nanotube (CNT) as a conductive material were mixed in a weight ratio of 98.7:0.9:0.4 and dispersed in N-methyl pyrrolidone to prepare a positive electrode active material slurry.

The prepared positive electrode slurry was applied onto one side of an aluminum current collector having a thickness of 10 μm using a reverse roll coater to achieve a loading level (L/L) of 19.8 $mg/cm^2$, and then dried at 110 °C. The positive electrode active material layer was roll pressed using a roll press to achieve a pellet density of 3.70 g/cc so as to manufacture a positive electrode

## Example 2

A negative electrode and a positive electrode were manufactured in the same manner as in Example 1, with a difference that 0.5 wt% of an additive was added to prepare a negative electrode slurry, which was then applied to achieve a loading level of 8.6 $mg/cm^2$ to 8.9 $mg/cm^2$.

## Example 3

A negative electrode and a positive electrode were manufactured in the same manner as in Example 1, with a difference that 1 wt% of an additive was added to prepare a negative electrode slurry, which was then applied to achieve a loading level of 8.6 $mg/cm^2$ to 8.9 $mg/cm^2$.

**Example 4**

A negative electrode and a positive electrode were manufactured in the same manner as in Example 1, with a difference that 5 wt% of an additive was added to prepare a negative electrode slurry, which was then applied to achieve a loading level of 8.6 $mg/cm^2$ to 8.9 $mg/cm^2$.

**Example 5**

A negative electrode and a positive electrode were manufactured in the same manner as in Example 1, with a difference that an additive represented by Formula 2-1 below was used.

Formula 2-1:

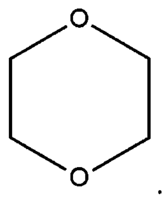

**Example 6**

A negative electrode and a positive electrode were manufactured in the same manner as in Example 5, with a difference that 0.5 wt% of an additive was added to prepare a negative electrode slurry, which was then applied to achieve a loading level of 8.6 $mg/cm^2$ to 8.9 $mg/cm^2$.

**Comparative Example 1**

A negative electrode and a positive electrode were manufactured in the same manner as in Example 1, with a difference that no additive was added to prepare a negative electrode slurry, which was then applied to achieve a loading level of 8.5 $mg/cm^2$ to 8.7 $mg/cm^2$.

**Comparative Example 2**

A negative electrode and a positive electrode were manufactured in the same manner as in Example 1, with a difference that 10 wt% of an additive was added to prepare a negative electrode slurry, which was then applied to achieve a loading level of 8.5 $mg/cm^2$ to 8.7 $mg/cm^2$.

**Evaluation 1: Evaluation of Properties of Negative Electrode Plate**

The negative electrodes according to Examples and Comparative Examples were evaluated for negative electrode slurry viscosity, negative electrode adhesive strength, and peel strength of upper/lower negative electrode portions.

The viscosity of the negative electrode slurries prepared in Examples and Comparative Examples was measured and is shown in Table 1 below. The viscosity of the negative electrode slurries was measured at a shear rate of 10 $s^{-1}$ at 25 °C using a rheometer (Anton Parr).

The negative electrode adhesive strength was measured using the following method. The negative electrode plates according to Examples and Comparative Examples were cut to a width of 25 mm and a length of 100 mm. A sample for evaluating the negative electrode adhesive strength was prepared by attaching a negative electrode active material layer side to a glass substrate using an adhesive tape (Celotape® No. 405 from Nichiban Co., Ltd.) as an adhesion surface. The sample was mounted on a peel tester (Instron 3400 series), and stress was measured when a current collector was peeled off at a rate of 300 mm/min at a 180° angle. The measurement was performed five times, and an average value was calculated as the peel strength. The adhesive strength (i.e., peel strength) was calculated according to Equation 1 below, and the results are shown in Table 1 below.

Adhesion strength (gf/mm) = measured force (gf) / length of adhesive area (mm). Equation 1:

The peel strength of the upper and lower negative electrode portions was measured using a surface and interfacial cutting analysis system (SAICAS) device as a diagonal cutting device. A blade with a 1 mm wide diamond edge was inserted diagonally from the electrode surface at a constant speed (horizontal: 6 μm/s, vertical: 0.6 μm/s), and after reaching an interface between the current collector and the electrode layer, horizontal stress applied to the blade during horizontal movement at a constant speed (horizontal: 6 μm/s) was compared as the peel strength. The peel strength was calculated according to Equation 2 below, and the results are shown in Table 1 below.

Equation 2:

$$\text{Peel strength (kN/m)} = \text{measured force (N)} / \text{length of peel area (m)}.$$

Greater adhesive strength (i.e., peel strength) indicates enhanced interfacial adhesion between the negative electrode current collector and the negative electrode active material layer, or among the negative electrode active material layers themselves, implying increased resistance to peeling from the negative electrode current collector or between the negative electrode active material layers.

Table 1:

| Item | Viscosity (cps) | Adhesive strength of negative electrode (gf/mm) | Peel strength (kN/m) | |
|---|---|---|---|---|
| | | | Upper portion | Lower portion |
| Example 1 | 3643 | 0.36 | 0.098 | 0.095 |
| Example 2 | 3579 | 0.37 | 0.095 | 0.090 |
| Example 3 | 3450 | 0.36 | 0.096 | 0.090 |
| Example 4 | 3442 | 0.32 | 0.095 | 0.091 |
| Example 5 | 3533 | 0.35 | 0.095 | 0.091 |
| Example 6 | 3542 | 0.33 | 0.094 | 0.090 |
| Comparative Example 1 | 4007 | 0.28 | 0.097 | 0.078 |
| Comparative Example 2 | 3405 | 0.26 | 0.094 | 0.080 |

## Evaluation 2: Evaluation of Charge/Discharge Characteristics

The negative electrodes manufactured in Examples and Comparative Examples were used to manufacture coin-half cell type negative electrode-rechargeable lithium batteries. A 10 μm thick Li foil was used as a counter electrode (positive electrode), and while using the negative electrode, a 20 μm thick polyethylene separator was assembled to prepare an electrode assembly, and an electrolyte solution was injected thereto to manufacture a CR2032 type coin-half cell negative electrode-rechargeable lithium battery through a typical method. As the electrolyte solution, 1.3 M $LiPF_6$ was dissolved in a non-aqueous organic solvent containing ethylene carbonate (EC), propylene carbonate (PC), and propylene propionate (PP) mixed in a volume ratio of 10:20:70.

The manufactured negative electrode-rechargeable lithium battery was charged at a constant current of 0.1 C and a voltage of 0.01 V at 25 °C, and then charged up to a constant current of 0.1 C while maintaining a voltage of 0.01 V. Subsequently, the negative electrode-rechargeable lithium battery was discharged up to a voltage of 1.5 V at a constant current of 0.1 C. (Formation process)

For discharge rate (2.0 C/0.2 C), each rechargeable lithium battery was charged at a constant current of 0.2 C and a voltage of 0.01 V at 25 °C, and then charged up to a constant current of 0.01 C while maintaining a voltage of 0.01 V. Each rechargeable lithium battery was discharged at a constant current of 0.2 C, 0.5 C, and 2.0 C up to a voltage of 1.5 V. Formation efficiency and discharge rate (2.0 C/0.2 C) were calculated according to Equations 3 and 4 below, and the results are shown in Table 2 below.

Equation 3:

$$\text{Formation efficiency (\%)} = (\text{discharge capacity/charge capacity}) * 100.$$

Discharge rate (2.0 C/0.2 C)(%) = (discharge capacity at 2.0 C / discharge capacity at 0.2 C) * 100. Equation 4:

Table 2:

| Item | Charge capacity (mAh/g) | Discharge capacity (mAh/g) | Formation efficiency (%) | Discharge rate (2.0 C/0.2 C) (%) |
|---|---|---|---|---|
| Example 1 | 362.2 | 340.7 | 94.1 | 151 |
| Example 2 | 362.3 | 340.9 | 94.1 | 136 |
| Example 3 | 362.8 | 341.3 | 94.1 | 121 |
| Example 4 | 362.8 | 341.2 | 94.1 | 110 |
| Example 5 | 362.2 | 340.5 | 94.1 | 125 |
| Example 6 | 362.2 | 340.2 | 94.1 | 117 |
| Comparative Example 1 | 362.6 | 341.6 | 94.2 | 78 |
| Comparative Example 2 | 363.1 | 341.3 | 94.2 | 82 |

**Evaluation 3: Evaluation of Lifetime at Room Temperature**

The negative electrode and the positive electrode manufactured in Examples and Comparative Examples, a polyethylene separator, and an electrolyte solution were used to manufacture a coin full cell. As the electrolyte solution, 1.3 M $LiPF_6$ was dissolved in a non-aqueous organic solvent containing ethylene carbonate (EC), propylene carbonate (PC), and propylene propionate (PP) mixed in a volume ratio of 10:20:70.

The manufactured rechargeable lithium batteries were subjected to 200 charge-discharge cycles under the conditions of 'charge at 25 °C and 1.0 C (CC/CV, 4.5V 0.02C cut-off) / discharge at 1.0 C (CC, 3.0 V cut-off)', and then battery characteristics were determined. DC internal resistance (DC-IR) was determined at SOC 20 by applying a 1 C current for 10 seconds and using "dR=dV/dI". Lifespan retention was calculated according to Equation 5 below. The results are shown in Table 3 below.

Lifespan retention (%)=(discharge capacity after 200 cycles/initial discharge capacity) * 100. Equation 5:

Table 3:

| Item | Charge capacity (mAh/g) | Discharge capacity (mAh/g) | Formation efficiency (%) | DC-IR, SOC20 (mΩ) | 200cyc Lifespan retention (%) |
|---|---|---|---|---|---|
| Example 1 | 191.8 | 173.8 | 90.6 | 12.3 | 85.9 |
| Example 2 | 189.9 | 173.1 | 90.6 | 13.1 | 86.6 |
| Example 3 | 191.8 | 173.7 | 90.6 | 14.0 | 86.8 |
| Example 4 | 191.5 | 172.3 | 90.1 | 14.6 | 85.6 |
| Example 5 | 189.7 | 173.1 | 90.5 | 12.3 | 85.8 |
| Example 6 | 189.9 | 173.1 | 90.6 | 13.3 | 85.9 |
| Comparative Example 1 | 192.6 | 176.8 | 91.8 | 11.7 | 85.3 |
| Comparative Example 2 | 189.6 | 170.9 | 90.1 | 15.2 | 84.2 |

**Evaluation 4: Evaluation of Thermal Exposure**

The negative electrode and the positive electrode manufactured in Examples and Comparative Examples, a polyethylene separator, and an electrolyte solution were used to manufacture a pouch cell. The manufactured positive electrode was punched to a size of 3*4 cm, and the manufactured negative electrode was punched to a size of 3.2*4.2 cm.

Subsequently, a PE separator was sandwiched between the manufactured positive electrode and the manufactured negative electrode, and an electrolyte solution containing 1.3 M $LiPF_6$ in a non-aqueous organic solvent containing ethylene carbonate (EC), propylene carbonate (PC), and propylene propionate (PP) mixed in a volume ratio of 10:20:70 was used to manufacture pouch cells sealed into aluminum pouches. The designed capacity of the manufactured battery was 36 mAh.

The manufactured rechargeable lithium batteries were exposed to a target temperature (high temperature) for 1 hour, and then evaluated for ignition, and the results are shown in Table 4 below. When the temperature was raised to the target temperature from room temperature, the heating rate was kept at 5 °C/min.

Table 4:

| Item | Target temperature | | |
|---|---|---|---|
| | 146 °C | 148 °C | 150 °C |
| Example 1 | - | 3OK/3 | 3F/3 |
| Example 2 | - | 3OK/3 | 1F/3 |
| Example 3 | - | 3OK/3 | 1F/3 |
| Example 4 | - | 3OK/3 | 1F/3 |
| Example 5 | 3OK/3 | 1F/3 | 3F/3 |
| Example 6 | - | 3OK/3 | 2F/3 |
| Comparative Example 1 | 3OK/3 | 3F/3 | - |
| Comparative Example 2 | 3OK/3 | 3F/3 | - |
| * N=No. of cells evaluated.<br>* F=Ignition (fail).<br>* OK=No ignition. | | | |

**Comprehensive Evaluation**

Referring to Table 1 above, it is seen that the negative electrodes using the additive according to the concept of the present disclosure (Examples 1 to 6) are superior to the negative electrodes of Comparative Examples in peel strength (i.e., adhesive strength).

Referring to Tables 2 and 3 above, it is seen that the rechargeable lithium batteries using the additive according to the concept of the present disclosure (Examples 1 to 6) exhibit greater discharge rate and lifespan characteristics at room temperature than the rechargeable lithium batteries of Comparative Examples. For example, the rechargeable lithium batteries using the additive according to the concept of the present disclosure have a lifespan retention of about 85% or greater at room temperature, and have a discharge rate in a range of about 120% to about 151%.

Referring to Table 4 above, it is determined that the rechargeable lithium batteries using the additive according to the concept of the present disclosure (Examples 1 to 6) exhibit better heat exposure evaluation results than the rechargeable lithium batteries of Comparative Examples. For example, the rechargeable lithium batteries using the additive according to the concept of the present disclosure have a flash point in a range of about 148 °C or greater. That is, it is determined that the rechargeable lithium batteries using the additive according to the present disclosure exhibit greater heat resistance.

A negative electrode for a rechargeable lithium battery according to an example embodiment may exhibit improved adhesive strength between a negative electrode active material layer and a negative electrode current collector.

A rechargeable lithium battery according to an example embodiment may exhibit improved stability and desired or improved lifespan characteristics.

Although the example embodiments of the present disclosure have been described above with reference to the accompanying drawings, the present disclosure may be applied in other specific forms without changing the technical idea or essential features thereof. Therefore, the above-described example embodiments are to be considered in all aspects as illustrative and not restrictive.

**Claims**

**1.** A negative electrode for a rechargeable lithium battery, the negative electrode comprising:

a negative electrode current collector; and
a negative electrode active material layer on the negative electrode current collector,
wherein the negative electrode active material layer includes:

a negative electrode active material;
a binder;
a conductive material; and
an additive represented by Formula 1 or Formula 2;

Formula 1:

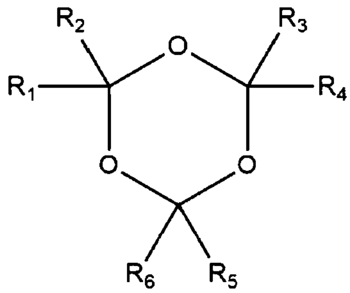

;

wherein $R_1$ to $R_6$ each independently comprises a hydrogen atom or a substituted or unsubstituted C1 to C10 alkyl group, and

Formula 2:

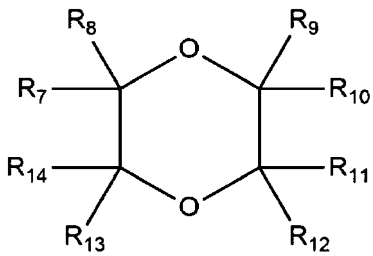

;

wherein $R_7$ to $R_{14}$ each independently comprises a hydrogen atom or a substituted or unsubstituted C1 to C10 alkyl group.

**2.** The negative electrode for a rechargeable lithium battery of claim 1, wherein the additive comprises 1,3,5-trioxane (TRX) represented by Formula 1-1 below:

Formula 1-1:

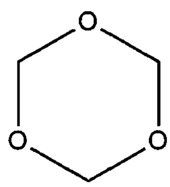

.

**3.** The negative electrode for a rechargeable lithium battery of claim 1 or 2, wherein the additive comprises at least one of a compound represented by Formula 1-2 below, a compound represented by Formula 1-3 below, a compound represented by Formula 1-4 below, and a combination thereof:

Formula 1-2:

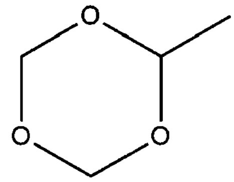

;

Formula 1-3:

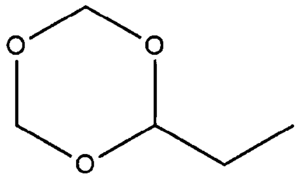

;

and

Formula 1-4:

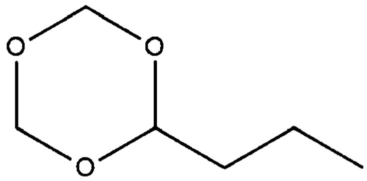

.

4. The negative electrode for a rechargeable lithium battery of any of claims 1-3, wherein the conductive material, the binder, and the negative electrode active material are provided in a weight ratio of 1:a:b,

"a" ranges from about 1 to about 3, and
"b" ranges from about 90 to about 99.

5. The negative electrode for a rechargeable lithium battery of any of claims 1-4, wherein the additive is provided in an amount in a range of 0.1 wt% to 5 wt% with respect to a total weight of the negative electrode active material.

6. The negative electrode for a rechargeable lithium battery of claim 5, wherein the additive is provided in an amount in a range of 0.2 wt% to 1 wt% with respect to the total weight of the negative electrode active material.

7. The negative electrode for a rechargeable lithium battery of any of claims 1-6, wherein the negative electrode active material comprises at least one of a carbon-based negative electrode active material, a Si-based negative electrode active material, a Sn-based negative electrode active material, and a combination thereof.

8. The negative electrode for a rechargeable lithium battery of any of claims 1-7, wherein the negative electrode active material comprises graphite.

9. The negative electrode for a rechargeable lithium battery of any of claims 1-8, wherein the binder comprises at least one of a non-aqueous binder, an aqueous binder, a dry binder, and a combination thereof.

10. The negative electrode for a rechargeable lithium battery of claim 9, wherein the aqueous binder comprises at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

**11.** The negative electrode for a rechargeable lithium battery of any of claims 1-10, wherein the negative electrode active material layer has a pellet density in a range of 1.4 g/cc to 1.7 g/cc.

**12.** The negative electrode for a rechargeable lithium battery of any of claims 1-11, wherein an adhesive strength between the negative electrode current collector and the negative electrode active material layer is in a range of 0.2 gf/mm to 0.4 gf/mm.

**13.** A rechargeable lithium battery comprising:

a positive electrode;
a negative electrode; and
an electrolyte solution,
wherein the negative electrode comprises the negative electrode according to any of claims 1-12.

**14.** The rechargeable lithium battery of claim 13, wherein the positive electrode comprises a positive electrode active material, and

the positive electrode active material comprises a lithium composite oxide represented by Formula 3:

Formula 3: $Li_xM^1_yM^2_zM^3_{1-y-z}O_{2-a}X_a$

x, a, y, and z satisfy $0.5 \leq x \leq 1.8$, $0 \leq a \leq 0.05$, $0 < y \leq 1$, $0 \leq z \leq 1$, and $0 < y+z \leq 1$,
$M^1$, $M^2$, and $M^3$ each independently comprise at least one of nickel (Ni), cobalt (Co), manganese (Mn), aluminum (Al), boron (B), barium (Ba), calcium (Ca), cerium (Ce), chromium (Cr), iron (Fe), molybdenum (Mo), niobium (Nb), silicon (Si), strontium (Sr), magnesium (Mg), titanium (Ti), vanadium (V), tungsten (W), zirconium (Zr), or lanthanum (La), and a combination thereof, and
X includes at least one of fluorine (F), sulfur (S), phosphorus (P), or chlorine (Cl).

**15.** The rechargeable lithium battery of claim 13 or 14, wherein the positive electrode active material comprises lithium cobalt oxide ($LiCoO_2$).

FIG. 1

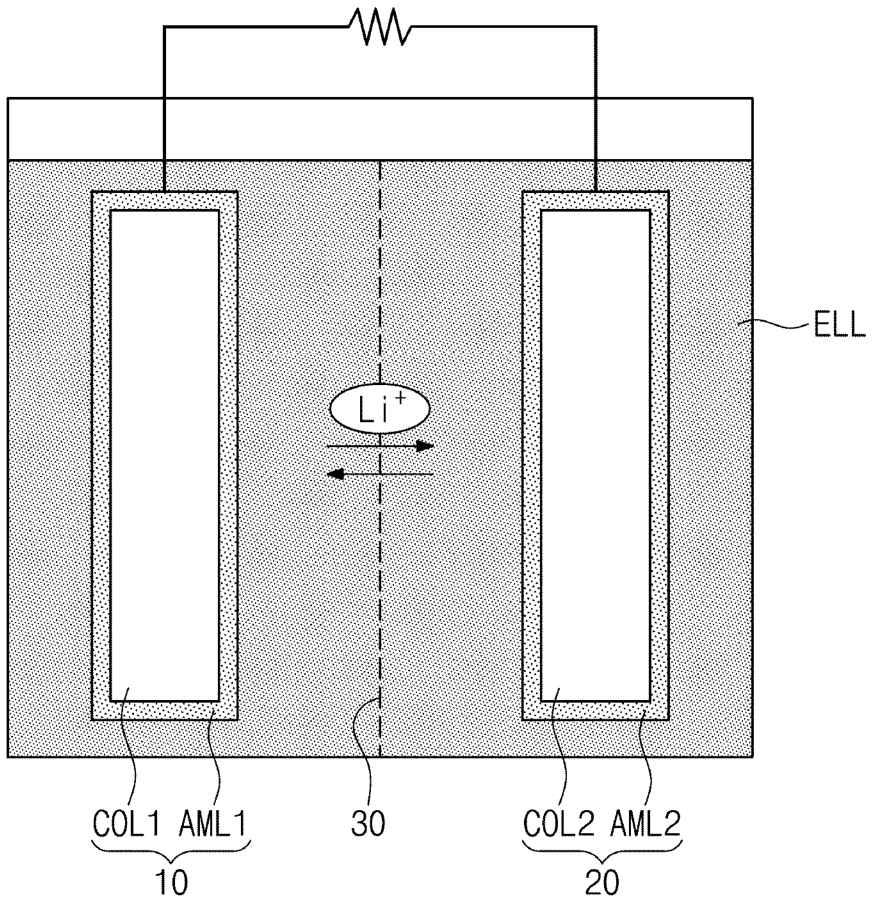


FIG. 2

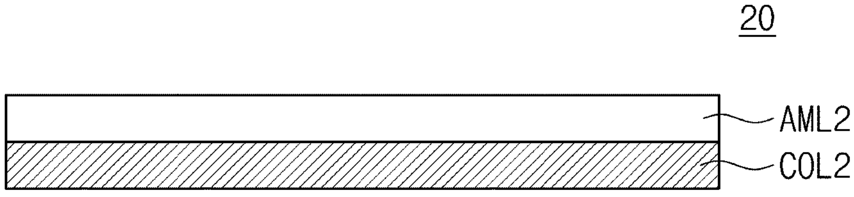

FIG. 3

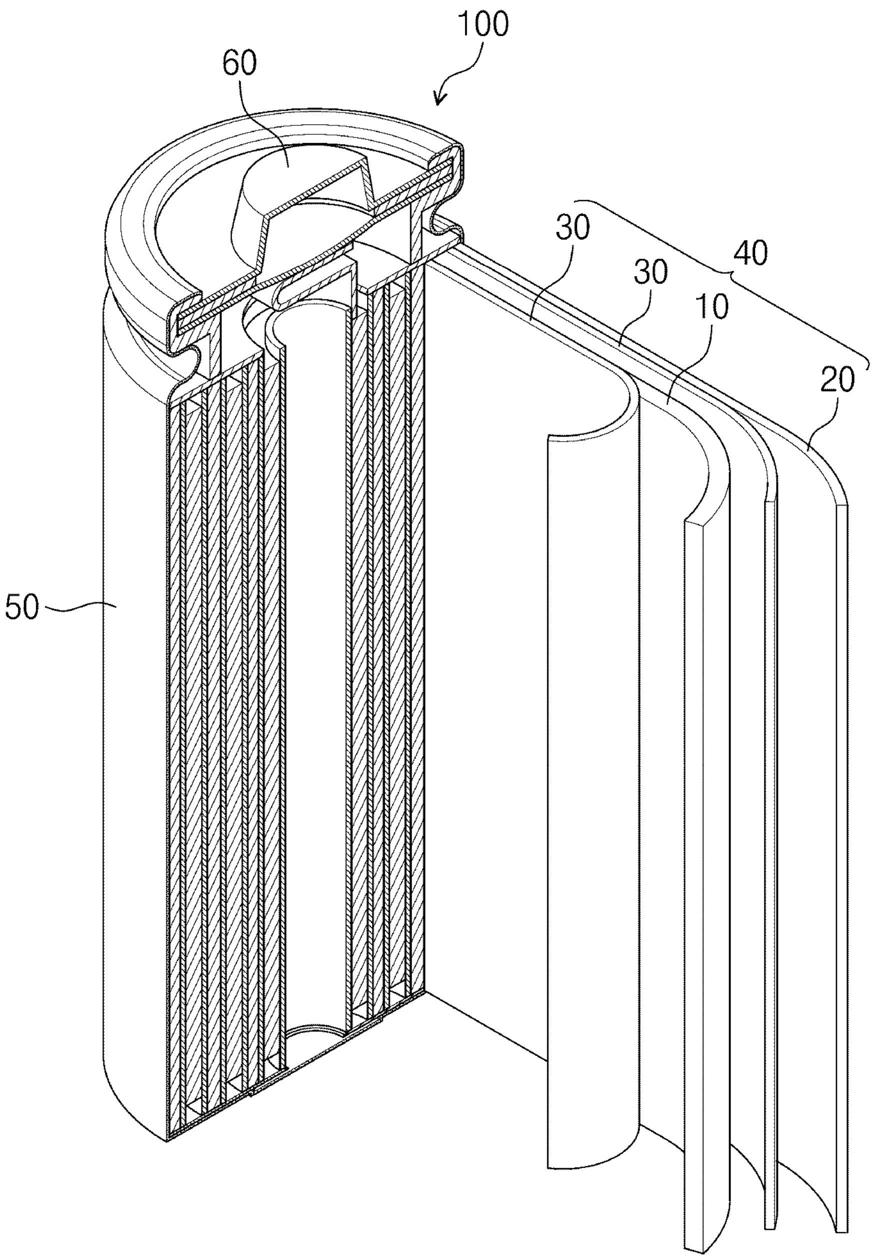

FIG. 4

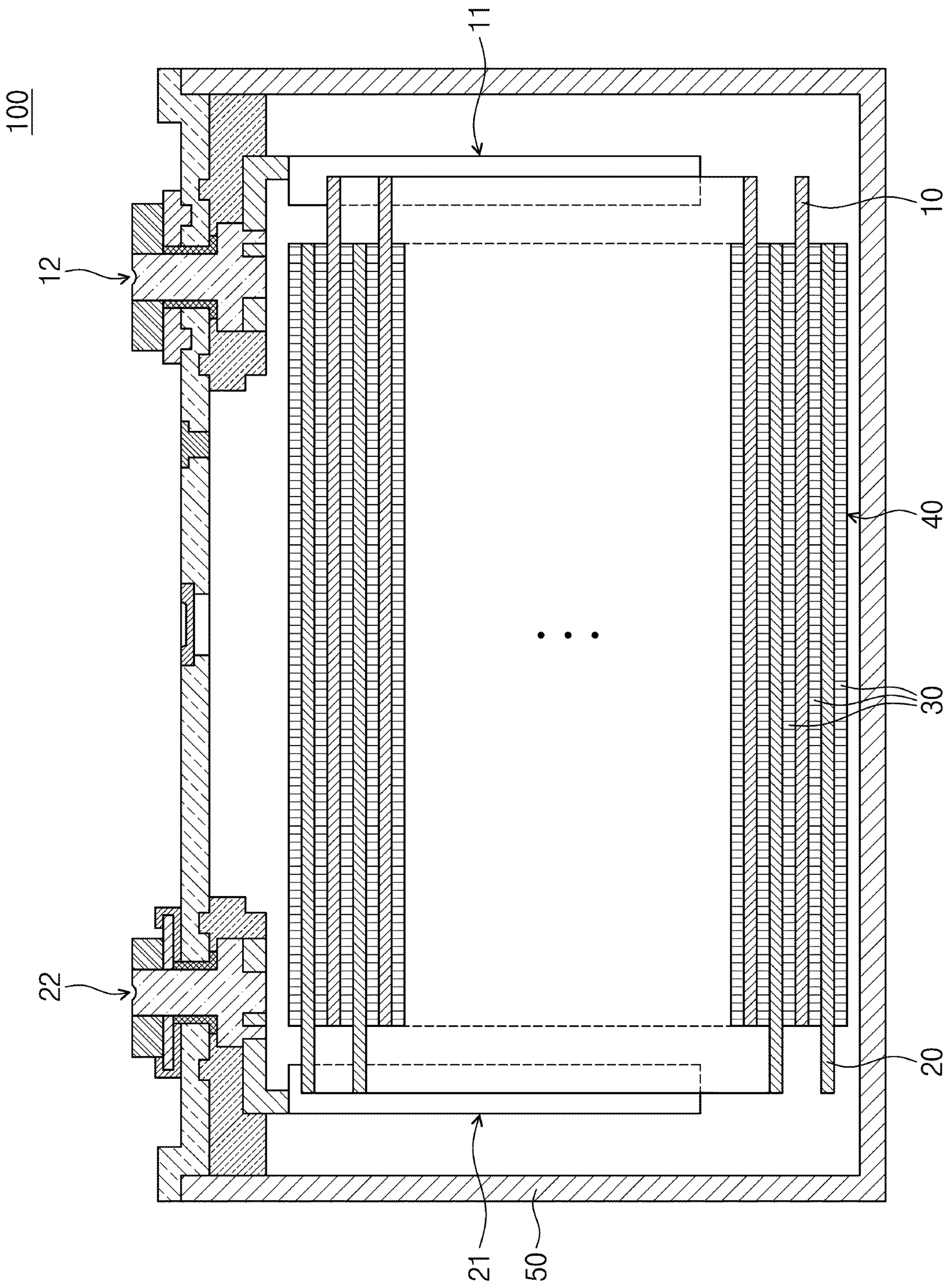

FIG. 5

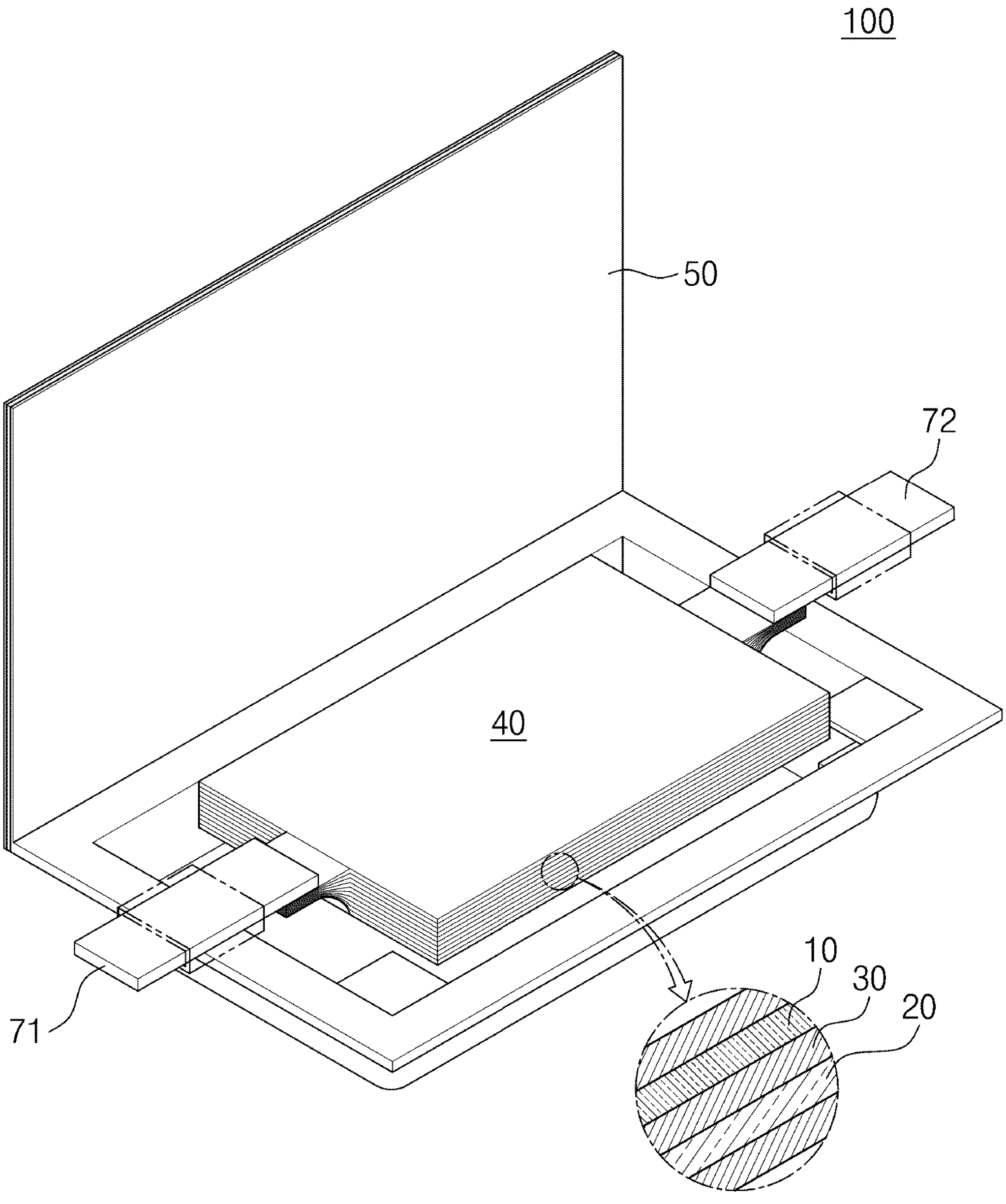

FIG. 6

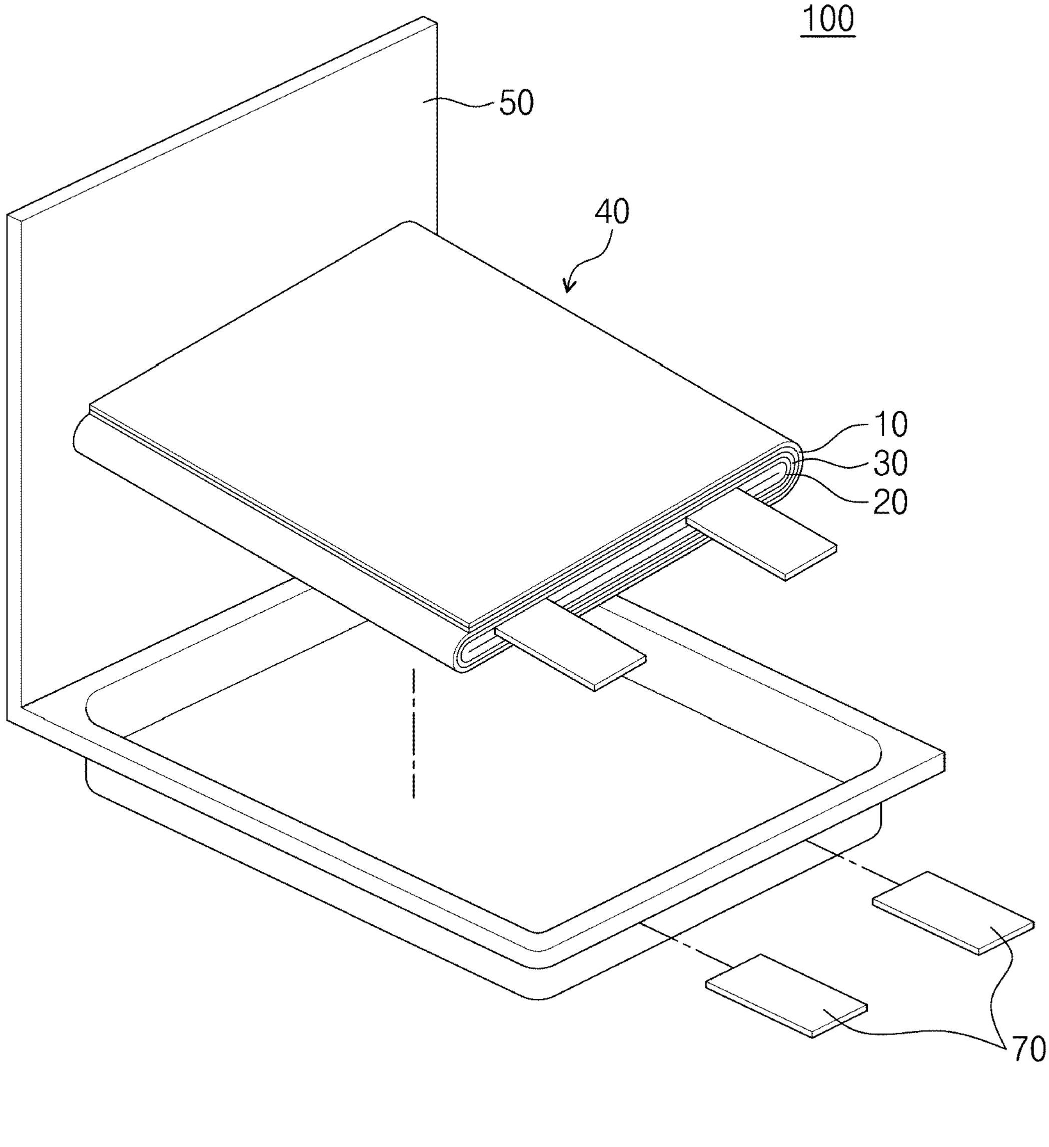

Europäisches Patentamt
European Patent Office
Office européen des brevets

# EUROPEAN SEARCH REPORT

Application Number
EP 25 21 3903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/168812 A1 (CONTEMPORARY AMPEREX TECHNOLOGY CO LTD [CN]) 22 August 2024 (2024-08-22) * paragraphs [0043], [0104], [0111], [0116] - [0117], [0150] - [0153] * | 1-15 | INV. H01M4/133 H01M4/525 H01M4/587 H01M4/62 H01M10/0525 |
| X,P | & EP 4 559 944 A1 (CONTEMPORARY AMPEREX TECHNOLOGY HONG KONG LTD [HK]) 28 May 2025 (2025-05-28) * paragraphs [0043], [0104], [0111], [0116] - [0117], [0150] - [0153] * ----- | 1-15 | |
| X | CN 114 899 359 A (INST CHEMISTRY CAS) 12 August 2022 (2022-08-12) * paragraphs [0021] - [0028], [0038], [0057], [0061] * ----- | 1,2, 7-10, 13-15 | |

| TECHNICAL FIELDS SEARCHED (IPC) |
|---|
| H01M |

The present search report has been drawn up for all claims

1

| Place of search | Date of completion of the search | Examiner |
|---|---|---|
| Munich | 16 March 2026 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 21 3903

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | Publication date | Patent family member(s) | Publication date |
|---|---|---|---|
| WO 2024168812 A1 | 22-08-2024 | CN 119654363 A | 18-03-2025 |
| | | EP 4559944 A1 | 28-05-2025 |
| | | JP 2025532547 A | 01-10-2025 |
| | | KR 20250042187 A | 26-03-2025 |
| | | US 2025391907 A1 | 25-12-2025 |
| | | WO 2024168812 A1 | 22-08-2024 |
| CN 114899359 A | 12-08-2022 | NONE | |

EPO FORM P0459

For more details about this annex : see Official Journal of the European Patent Office, No. 12/82